# EUROPEAN PATENT APPLICATION

(11) **EP 1 288 692 A1**
(43) Date of publication of application: **05.03.2003**
(21) Application number: 02256001.5
(22) Date of filing: 29.08.2002
(51) Int. Cl.: G02B 7/02, B29C 65/08, G11B 7/22

(54) **Structure for connecting a lens to a lens holder without using an adhesive**

(30) Priority: 29.08.2001 JP 2001259115
(71) Applicant: Mitsumi Electric Co., Ltd., Chofu-shi, Tokyo (JP)
(72) Inventor: Kan, Kenji, Mitsumi Electric Co., Ltd., Atsugi-shi, Kanagawa (JP); Negoro, Kenichi, Mitsumi Electric Co., Ltd., Atsugi-shi, Kanagawa (JP)
(74) Representative: Moir, Michael Christopher

(57) **Abstract**

In a structure for connecting a lens (17) to a lens holder (25) having a mounting surface (31), the lens has a flange (26) mountable on the mounting surface. The flange has a particular surface faced toward the mounting surface and at least three protrusions (27) on the particular surface. The mounting surface has a plurality of recesses (32) formed at positions corresponding to the protrusions. Each of the recesses has a depth smaller than a height of a corresponding one of the protrusions and a volume greater than that of the corresponding protrusion. The protrusions are placed in the respective recesses, and may be welded to the lens holder by ultrasonic means.

## Description

### Background of the Invention:

This invention relates to a structure and a method for fixing a lens used in an optical disk drive or the like to a lens holder.

An optical disk drive is an apparatus for writing information into an optical disk by the use of a laser beam and for reading information already written in the optical disk. The optical disk drive of the type has an optical pickup for irradiating the laser beam onto the optical disk and for detecting a reflected beam from the optical disk. The optical pickup comprises an objective lens for focusing or condensing the laser beam on the optical disk and a lens holder for holding the objective lens.

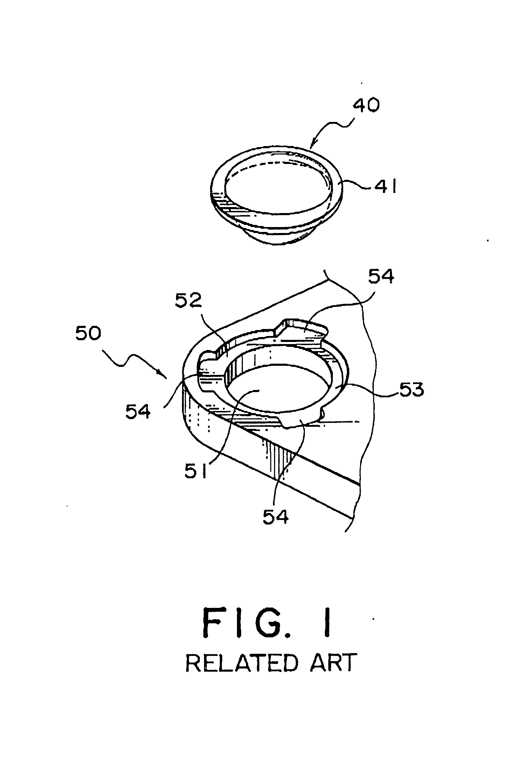

Referring to Fig. 1, description will be made in detail about a structure for fixing an objective lens 40 to a lens holder 50 in an existing optical pickup.

The objective lens 40 has a flange 41 formed at its outer peripheral edge. On the other hand, the lens holder 50 has a through hole 51 for passing a laser beam and a stepped portion 52 for receiving the objective lens 40. The stepped portion 52 has a mounting surface 53 for mounting the flange 41 of the objective lens 40 and a plurality of adhesive-applying portions 54 extending outward from the mounting surface 53 at three positions equiangularly spaced in a circumferential direction of the mounting surface 53.

The objective lens 40 and the lens holder 50 are fixedly connected or bonded to each other in the following manner.

At first, the objective lens 40 is fitted into the stepped portion 52 so that the flange 41 is placed on the mounting surface 53. Then, an appropriate amount of UV-setting resin as an adhesive is applied to the adhesive-applying portions 54 of the lens holder 50 and a part of the mounting surface 53 corresponding to each of the adhesive-applying portions 54. Next, ultraviolet light is irradiated to solidify or harden the UV-setting resin.

In the bonding structure illustrated in Fig. 1, the objective lens 40 is bonded to the lens holder 50 by the use of adhesive. However, it is difficult to obtain sufficient bonding strength between the objective lens 40 and the lens holder 50. Due to the thickness of the adhesive, the objective lens 40 may adhere to the lens holder 50 in a state in which the objective lens 40 is not flat on the lens holder 50. When the adhesive is applied, the adhesive may possibly be attached to an effective part of the objective lens 40 and inhibit transmission of the laser beam. Furthermore, since the adhesive-applying portions 54 are required, the lens holder 50 must be greater in size than that required to receive the objective lens 40.

### Summary of the Invention

It is therefore an object of the preferred embodiment of this invention to provide a structure and a method which are capable of firmly and securely connecting a lens to a lens holder without use of an adhesive.

It is another object to provide the structure and the method mentioned above, which are capable of achieving sufficient connecting strength and avoiding the lens from being lifted up from the lens holder.

It is still another object to provide the structure and the method mentioned above, which are capable of preventing an effective part of the lens from being damaged by an adhesive attached thereto.

It is yet another object to provide the structure and the method mentioned above, which are capable of allowing a lens holder of a smaller size to be used.

It is a further object to provide an optical pickup comprising an objective lens connectable to a lens holder by the use of the above-mentioned structure.

According to an aspect of the present invention, there is provided a structure for connecting a lens to a lens holder having a mounting surface, said lens having a flange placed on said mounting surface. In the structure, said flange has a particular surface faced to said mounting surface and at least three protrusions on said particular surface, the mounting surface having a plurality of recesses formed at positions corresponding to said protrusions, each of said recesses having a depth smaller than a height of a corresponding one of said protrusions and a volume greater than that of said corresponding one, the protrusions being placed in said recesses, respectively, and ultrasonic welded to said lens holder.

According to another aspect of the present invention, there is provided a method of connecting a lens to a lens holder having a mounting surface, said lens having a flange which is placed on said mounting surface and has a particular surface facing said mounting surface. The method comprises the steps of providing said particular surface with at least three protrusions, providing said mounting surface with recesses formed at positions corresponding to said protrusions, each of said recess having a depth smaller than a height of a corresponding one of said protrusions and a volume greater than that of said corresponding one, facing said particular surface to said mounting surface so that said protrusions are received in said recesses, respectively, and ultrasonic welding said protrusions to said lens holder by the use of an ultrasonic welder.

According to still another aspect of the present invention, there is provided an optical pickup having the structure mentioned above.

### Brief Description of the Drawings

Preferred features of the present invention will now be described, by way of example only, with reference to the accompanying drawings, in which:-
Fig. 1 is a perspective view of an objective lens and a lens holder in an existing optical pickup before assembling;
Fig. 2 is a view for describing a general structure of an optical pickup;
Fig. 3 is a perspective view of an optical pickup according to one embodiment of this invention;
Fig. 4 is a perspective view of an objective lens and a lens holder in the optical pickup illustrated in Fig. 3 before they are coupled to each other; and
Fig. 5 is an enlarged sectional view of a part of the objective lens and the lens holder illustrated in Fig. 4 after they are coupled to each other.

### Description of the Preferred Embodiment:

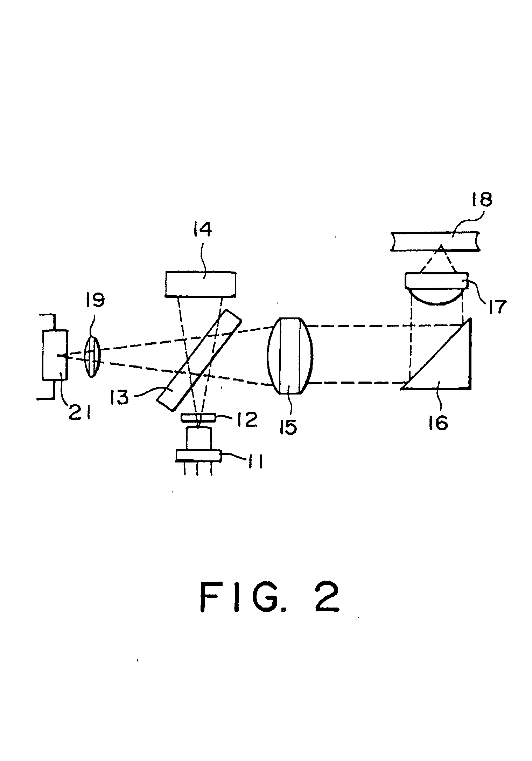

Referring to Fig. 2, description will be made of a general structure of an optical pickup.

The optical pickup illustrated in the figure is adapted to be used in an optical disk drive mounted to an electronic apparatus such as a personal computer. The optical pickup comprises as a light emitting element a laser diode 11 which is a semiconductor laser for generating a laser beam. The laser beam emitted from the laser diode 11 passes through a diffraction grating 12 to be incident to a beam splitter 13. The laser beam is split and branched by the beam splitter 13. Specifically, a part of the laser beam is incident to a monitor 14 having a photo diode while the other part of the laser beam passes through a collimate lens 15, a turning mirror 16, and an objective lens 17 to irradiate an optical disk 18. The monitor 14 detects the intensity of the laser beam. The detected intensity is used to control driving of the laser diode 11. Thus, by the use of the laser beam emitted from the laser diode 11, data can be recorded in the optical disk 18.

On the other hand, a reflected beam from the optical disk 18 passes through the objective lens 17, the turning mirror 16, the collimate lens 15, the beam splitter 13, and a sensor lens 19 to be incident to a photo diode 21 as a light-receiving element. Thus, by the use of the laser beam emitted from the laser diode 11, the data recorded in the optical disk 18 can be reproduced with reference to an electric signal produced by the photo diode 21.

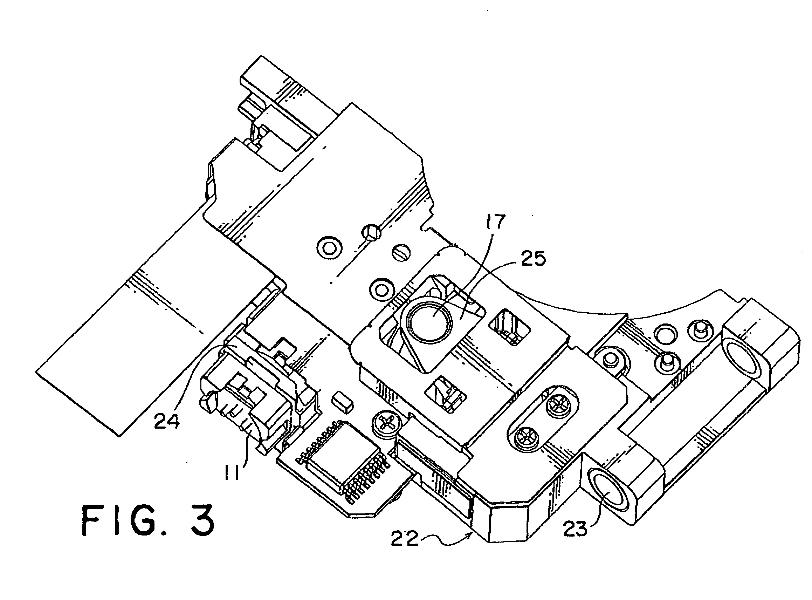

Referring to Fig. 3 in addition to Fig. 2, the optical pickup will be described in greater detail.

Herein, various optical elements, such as the beam splitter 13, the collimate lens 15, the turning mirror 16, and the objective lens 17, arranged in a path of the laser beam are collectively called an optical system. The optical system, the laser diode 11, the monitor 14, and the photo diode 21 are assembled in an optical base 22 as a housing of the device. The optical base 22 is mounted to the optical disk drive to be movable along a guide shaft (not shown) which is provided to the optical disk drive and slidably inserted through a guide hole 23. The laser diode 11 is fixed to a laser diode fixing portion 24 of the optical base 22. The objective lens 17 is fixedly held by a lens holder 25 movably held by the optical base 22.

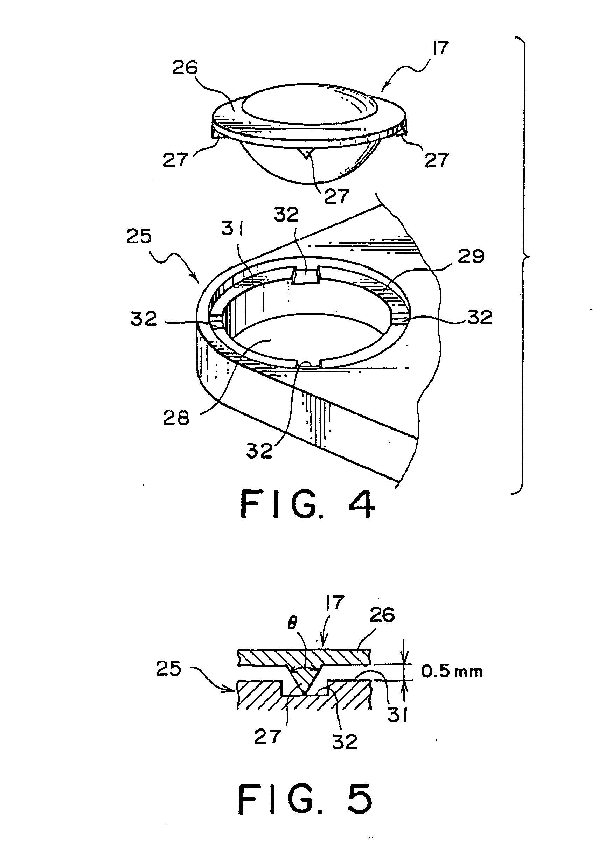

Referring to Fig. 4, description will be made in detail of a structure and a method for fixedly connecting or bonding the optical lens 17 to the lens holder 25 in the optical pickup illustrated in Fig. 3. In Fig. 4, only a part of the lens holder 25, i.e., a part for holding the objective lens 17 is illustrated.

The objective lens 17 is made of a transparent resin material and has a flange 26 formed at its outer peripheral edge. The flange 26 has a surface (lower surface in the figure) faced to the lens holder 17 and provided with four protrusions 27 formed at four positions equiangularly spaced in a circumferential direction of the objective lens 17. Each of the protrusions 27 extends in a radial direction of the objective lens 17. All of the protrusions 27 are substantially equal in size to one another.

On the other hand, the lens holder 25 has a through-hole 28 for passing the laser beam and a stepped portion 29 for receiving the objective lens 17. The stepped portion 29 has a mounting surface 31 provided with four recesses 32 formed at positions corresponding to the protrusions 27 of the objective lens 17, i.e., at four positions equiangularly-spaced in a circumferential direction of the mounting surface 31, respectively.

Referring to Fig. 5, the objective lens 17 is coupled to the lens holder 25. Each of the protrusions 27 extends in the radial direction and forms a triangle in a section taken along a plane perpendicular to the radial direction. The triangle may be an equilateral triangle or an isosceles triangle. Each of the protrusions 27 has a tip portion facing the mounting surface 31. The triangle has an angle θ preferably between 60 and 90 degrees at the tip portion.

Each recess 32 has a depth smaller than the height of each protrusion 27 so that, when the protrusion 27 of the objective lens 17 is disposed in the recess 32, a gap of about 0.5mm is formed between the mounting surface 31 and the flange 26. The recess 32 has a width (length in the circumferential direction) determined, taking its depth (length in the radial direction of the through·hole 28) into consideration, so that a part of the protrusion 27 is not extruded or protruded from the recess 32 when the protrusion 27 is welded to the lens holder 25 as will later be described. Thus, the width of the recess 32 is determined so that the volume of the recess 32 is at least greater than the volume of the protrusion 27.

Next, description will be made of a method of fusing the objective lens 17 to the lens holder 25. Herein, use is made of a so-called energy-direct-joint method of utilizing ultrasonic waves.

At first, the objective lens 17 is fitted to the stepped portion 29 of the lens holder so that the protrusions 27 are placed in the recesses 32, respectively. At this time, at least a part of the flange 26 of the objective lens 17 is disposed on the stepped portion 29 so that the objective lens 17 is positioned.

Next, a horn of an ultrasonic welder (not shown) is pressed against the flange 26 of the objective lens 17 on the side opposite to the protrusions 27 and ultrasonic vibration is generated under pressure. By a complex action of the pressure and the ultrasonic vibration, the protrusions 27 are melted so that the objective lens 17 is welded to the lens holder 25. The bonding strength between the objective lens 17 and the lens holder 25 bonded in the above-mentioned manner is strong as compared with the case where an adhesive is used. Furthermore, according to this method, no adverse affects result, such as adhesive attaching to an effective part of the objective lens 17. According to this method, the objective lens 17 can be more easily and quickly bonded to the lens holder 25 as compared with the case where the adhesive is used. In addition, an adhesive-applying portion for escaping adhesive is unnecessary, so that the lens holder can be reduced in size.

Although this invention has been described in conjunction with the preferred embodiment thereof, this invention is not restricted to the foregoing embodiment. For example, the number of the protrusions is equal to four in the foregoing embodiment. However, the number of protrusions may be any desired number not smaller than three. The foregoing embodiment is directed to the objective lens. However, this invention is similarly applicable to various other lenses, such a collimate lens. Furthermore, this invention is applicable not only to the optical pickup but also to bonding of the lens and the lens holder in various other fields.

Each feature disclosed in this specification (which term includes the claims) and/or shown in the drawings may be incorporated in the invention independently of other disclosed and/or illustrated features.

The text of the abstract filed herewith is repeated here as part of the specification.

In a structure for connecting a lens (17) to a lens holder (25) having a mounting surface (31), the lens has a flange (26) mountable on the mounting surface. The flange has a particular surface faced toward the mounting surface and at least three protrusions (27) on the particular surface. The mounting surface has a plurality of recesses (32) formed at positions corresponding to the protrusions. Each of the recesses has a depth smaller than a height of a corresponding one of the protrusions and a volume greater than that of the corresponding protrusion. The protrusions are placed in the respective recesses, and may be welded to the lens holder by ultrasonic means.

## Claims

1. A connecting structure for connecting a lens to a lens holder, said structure comprising a mounting surface provided on the lens holder and a flange provided on said lens and mountable on said mounting surface, wherein said flange has a particular surface for presenting to said mounting surface and at least three protrusions on said particular surface, said mounting surface having a plurality of recesses formed at positions corresponding to said protrusions, each of said recesses having a depth smaller than a height of a corresponding one of said protrusions and a volume greater than that of said corresponding protrusions, said protrusions each being positionable in a respective recess.

2. The structure according to claim 1, wherein said protrusions are welded to said lens holder.

3. The structure according to claim 1 or 2, wherein each of said protrusions extends in a radial direction of said lens and forms a triangle in a section taken along a plane perpendicular to said radial direction.

4. The structure according to claim 3, wherein said triangle is an equilateral triangle.

5. The structure according to claim 3, wherein said triangle is an isosceles triangle.

6. The structure according to claim 3, wherein each of said protrusions has a tip portion facing said mounting surface, said triangle having an angle between 60 and 90 degrees at said tip portion.

7. A method of connecting a lens to a lens holder having a mounting surface, said lens having a flange which is mountable on said mounting surface and has a particular surface for presenting to said mounting surface, the method comprising the steps of:
providing said particular surface with at least three protrusions;
providing said mounting surface with recesses formed at positions corresponding to said protrusions, each of said recesses having a depth smaller than a height of a corresponding one of said protrusions and a volume greater than that of said corresponding protrusion;
facing said particular surface to said mounting surface so that said protrusions are received in said respective recesses.

8. The method according to claim 7, further comprising the step of:
welding said protrusions to said lens holder by the use of an ultrasonic welder.

9. The method according to claim 7 or 8, wherein the lens is a resin lens.

10. The method according to claim 7, 8 or 9, wherein each of said protrusions extends in a radial direction of said lens and forms a triangle in a section taken along a plane perpendicular to said radial direction.

11. The method according to claim 10, wherein said triangle is an equilateral triangle.

12. The method according to claim 10, wherein said triangle is an isosceles triangle.

13. The method according to claim 10, wherein each of said protrusions has a tip portion facing said mounting surface, said triangle having an angle between 60 and 90 degrees at said tip portion.

14. An optical pickup comprising a lens and a lens holder, said lens holder having a mounting surface and said lens having a flange mounted on said mounting surface, wherein said flange has a particular surface faced toward said mounting surface and at least three protrusions on said particular surface, said mounting surface having a plurality of recesses formed at positions corresponding to said protrusions, each of said recesses having a depth smaller than a height of a corresponding one of said protrusions and a volume greater than that of said corresponding protrusions, said protrusions each being positioned in a respective recess.

15. The optical pickup according to claim 14, wherein said lens is a resin lens.
